# DEMANDE DE BREVET EUROPEEN

(11) **EP 3 301 497 A1**
(43) Date de publication de la demande: **04.04.2018**
(21) Numéro de dépôt: 17193770.9
(22) Date de dépôt: 28.09.2017
(51) Int. Cl.: G02B 19/00, F21V 8/00, F21V 14/06, F21S 41/63

(54) **MODULE D'ECLAIRAGE AUTOMOBILE AVEC LENTILLE A FOCALE REGLABLE**

(30) Priorité: 28.09.2016 FR 1659246
(71) Demandeur: Valeo Vision, 93012 Bobigny Cedex (FR)
(72) Inventeur: ALBOU, Pierre, 93012 BOBIGNY Cedex (FR)
(74) Mandataire: Valeo Vision

(57) **Abrégé**

L'invention a trait à un module optique (2) apte à former un faisceau lumineux, comprenant au moins une source lumineuse (4) apte à émettre de la lumière ; un premier système optique (6) à puissance optique variable ; un élément (14) de mise en forme du faisceau lumineux, en matériau transparent ou translucide avec une face d'entrée (14¹), et une face de sortie (14²), le foyer (*f*) du premier système optique (6) pouvant être déplacé de l'avant à l'arrière de la face d'entrée (14¹), et vice versa, de manière à faire varier l'étendue de la face de sortie (14²) qui est éclairée ; et un deuxième système optique (16) apte à projeter la lumière sortant de la face de sortie (14²) en vue former le faisceau lumineux suivant un axe optique du module (18).

## Description

L'invention a trait au domaine de l'éclairage et/ou de la signalisation lumineuse, notamment pour véhicule automobile. Plus particulièrement, l'invention a trait à un module lumineux et à un dispositif d'éclairage pour véhicule automobile.

Le document de brevet publié DE 196 48 620 A1 divulgue un dispositif d'éclairage comprenant une source lumineuse, un réflecteur et une lentille biconvexe à puissance optique variable, c'est-à-dire dont la distance focale est variable. Les rayons émis par la source lumineuse sont réfléchis par le réflecteur vers la lentille et cette dernière fait converger ces rayons vers un foyer dont la distance focale est variable par modification de la courbure des faces convexes de la lentille. Cette dernière est réalisée en matériau flexible et peut ainsi être déformée élastiquement par l'exercice d'efforts de pression ou de traction au moyen d'un ou plusieurs actuateurs mécaniques. La lentille peut être creuse et remplie d'un liquide dont le volume est modulable par un actuateur fluidique raccordé à la lentille. Cet enseignement est intéressant en ce qu'il permet de modifier le faisceau lumineux de manière progressive sans déplacement d'un élément optique du dispositif. Avec ce dispositif, la forme du faisceau lumineux reste cependant essentiellement la même, seule la distance de convergence varie. Les possibilités d'application de ce dispositif pour des fonctions d'éclairage plus complexes, comme notamment dans le domaine automobile contraint à réglementations, restent limitées.

L'invention a pour objectif de proposer une solution palliant au moins un des inconvénients de l'état de l'art susmentionné. Plus particulièrement, l'invention a pour objectif de proposer un module lumineux qui soit apte à produire un faisceau lumineux dont la forme est variable, et ce de manière simple et fiable.

L'invention a pour objet un module optique apte à former un faisceau lumineux, comprenant : au moins une source lumineuse apte à émettre de la lumière ; un premier système optique à puissance optique variable, apte à recevoir la lumière de la ou des sources lumineuses et à la faire converger vers un foyer à une distance focale variable ; remarquable en ce qu'il comprend, en outre, un élément de mise en forme du faisceau lumineux, en matériau transparent ou translucide avec une face d'entrée apte à recevoir la lumière du premier système optique, et une face de sortie apte à être éclairée par ladite lumière, le foyer du premier système optique pouvant être déplacé de l'avant vers l'arrière de la face d'entrée, et vice versa, de manière à faire varier l'étendue de la face de sortie qui est éclairée ; et un deuxième système optique apte à projeter la lumière sortant de la face de sortie en vue former le faisceau lumineux suivant un axe optique du module.

La source lumineuse est avantageusement unique, du type LED ou laser associée à un dispositif de conversion de longueur de longueur d'onde ; sa surface d'émission peut être carrée, rectangulaire ou circulaire. La surface d'émission est avantageusement inférieure à 1mm².

Selon un mode avantageux de l'invention, l'élément de mise en forme comprend au moins une face latérale apte à réfléchir une partie de la lumière lorsque le foyer du premier système optique est situé à l'arrière, suivant le sens de parcours de la lumière, de la face de sortie, et préférentiellement de la face d'entrée, dudit élément. La ou les faces latérales peuvent être recouvertes d'un revêtement réfléchissant.

Selon un mode avantageux de l'invention, la ou au moins une des faces latérales de l'élément de mise en forme est généralement parallèle à l'axe optique du module.

Selon un mode avantageux de l'invention, la face d'entrée et/ou la face de sortie de l'élément de mise en forme est généralement perpendiculaire à l'axe optique.

Selon un mode avantageux de l'invention, la ou les sources lumineuses et le premier système optique sont alignés avec l'axe optique du module.

Selon un mode avantageux de l'invention, le deuxième système optique comprend un foyer situé sur la face de sortie de l'élément de mise en forme.

Selon un mode avantageux de l'invention, la face de sortie de l'élément de mise en forme comprend au moins un, préférentiellement deux bords généralement droits et ledit module optique est configuré pour que, lorsque le foyer du premier système optique est situé à l'arrière, suivant le sens de parcours de la lumière, de la face d'entrée de l'élément de mise en forme, l'éclairement au niveau d'au moins un desdits bords, préférentiellement des deux bords, est supérieur ou égal à 1/10 de l'éclairement maximum Emax de la face de sortie dudit élément, ledit au moins un bord servant de bord(s) de coupure du faisceau lumineux, de manière à ce que le faisceau lumineux forme une image dont une partie du contour correspond à un contour de ladite face de sortie.

Selon un mode avantageux de l'invention, les deux bords ou deux des bords de la face de sortie sont adjacents et généralement perpendiculaires.

Selon un mode avantageux de l'invention, le faisceau lumineux, lorsque les bords de la face de sortie de l'élément de mise en forme sont éclairés à Emax/10 ou plus, forme une image avec une coupure généralement verticale et une coupure horizontale, lesdites coupures correspondant aux deux bords.

Selon un mode avantageux de l'invention, l'élément de mise en forme présente une forme généralement parallélépipédique.

Selon un mode avantageux de l'invention, le module est configuré pour que, lorsque le foyer du premier système optique est situé à l'avant, suivant le sens de parcours de la lumière, de la face d'entrée et sur, ou à l'arrière de, la face de sortie de l'élément de mise en forme, une portion de la face de sortie avec un niveau d'éclairement supérieur ou égal à Emax/10 correspondant à moins de 50%, préférentiellement moins de 30%, plus préférentiellement moins de 15%, de ladite face soit éclairée, sans que les bords de ladite face soient inclus dans la portion avec un niveau d'éclairement supérieur ou égal à Emax/10. Le foyer est alors situé dans l'élément de mise en forme, préférentiellement à proximité ou sur la face de sortie.

Selon un mode avantageux de l'invention, le module est configuré pour que le foyer du premier système optique puisse être situé suffisamment proche de la face de sortie de l'élément de mise en forme de sorte à ce que la portion éclairée de la face de sortie forme une image de la ou des sources lumineuses.

Selon un mode avantageux de l'invention, le faisceau lumineux, lorsqu'une portion seulement de la face de sortie de l'élément de mise en forme est éclairée, forme une image dont le contour correspond au contour de ladite portion.

Selon un mode avantageux de l'invention, le deuxième système optique comprend une lentille plan-convexe.

Selon un mode avantageux de l'invention, le premier système optique comprend une lentille à distance focale variable.

Selon un mode avantageux de l'invention, la lentille à distance focale variable forme un dioptre dont la forme est modulable par l'action d'un liquide contenu dans la lentille, le liquide pouvant être mis sous pression ou déformé par application d'un champ électrique.

Selon un mode avantageux de l'invention, le dioptre peut changer de concavité.

Selon un mode avantageux de l'invention, le premier dispositif optique comprend, en outre, une première lentille plan-convexe située entre la ou les sources lumineuses et la lentille à distance focale variable, et une deuxième lentille plan-convexe située entre la lentille à distance focale variable et l'élément de mise en forme. La fonction de ces première et deuxième lentilles est de décaler la plage de puissance optique de la lentille à distance focale variable.

L'invention a également pour objet un dispositif d'éclairage pour véhicule automobile, comprenant un module optique, remarquable en ce que le module est selon l'invention, ledit module étant configuré pour assurer, alternativement, une première fonction d'éclairage sans coupure lorsque le foyer du premier système optique est positionné de manière à ce que moins de 50% de la face de sortie de l'élément de mise en forme soit éclairée avec un niveau d'éclairement supérieur ou égal à Emax/10, sans que les bords de ladite face soient inclus dans la portion avec un niveau d'éclairement supérieur ou égal à Emax/10, et une deuxième fonction d'éclairage avec coupure, notamment verticale, lorsque ledit foyer est positionné de manière à ce que les bords de ladite face de sortie soit éclairés à au moins 1/10 de l'éclairement maximal Emax de la face de sortie. Avantageusement, le foyer est situé sur la face de sortie pour la première fonction d'éclairage et à l'arrière de la face d'entrée, suivant le sens de parcours de la lumière, pour la deuxième fonction d'éclairage.

Selon un mode avantageux de l'invention, la deuxième fonction d'éclairage comprend une coupure horizontale et est configurée pour compléter vers le haut une fonction d'éclairage à coupure horizontale du type croisement, en vue de réaliser une fonction d'éclairage du type route.

Selon un mode avantageux de l'invention, le module est monté pivotant suivant un axe essentiellement vertical, la deuxième fonction d'éclairage étant configurée pour coopérer avec un autre dispositif d'éclairage symétrique par rapport à un plan vertical longitudinal du véhicule, en vue former un faisceau d'éclairage avec une zone intermédiaire plus sombre et mobile horizontalement par pivotement contrôlé desdits modules.

Les mesures de l'invention sont intéressantes en ce qu'elles permettent d'exploiter une source lumineuse pour deux fonctions différentes dont au moins une requiert une mise en forme du faisceau lumineux produit. Grâce à l'utilisation du premier système optique à distance focale variable, en l'occurrence via une lentille à géométrie variable, le module ne comprend aucun élément optique qui doit subir un déplacement par rapport aux autres. Il en résulte par conséquent une fiabilité intéressante, un coût raisonnable et une grande précision. De plus, l'utilisation du module pour assurer, d'une part, une première fonction d'éclairage du type longue portée, et d'autre part, une deuxième fonction d'éclairage à coupure, plus particulièrement à coupure verticale et/ou horizontale, est particulièrement intéressant car ces deux fonctions sont activées de manière alternative. Une même source lumineuse et un même module lumineux peut ainsi être utilisé pour deux fonctions, moyennant une adaptation dudit module via le premier système optique.

D'autres caractéristiques et avantages de la présente invention seront mieux compris à l'aide de la description et des figures parmi lesquelles :
- La figure 1 est une représentation schématique de côté d'un module lumineux selon l'invention, le module étant dans une première configuration ;
- La figure 2 est une représentation schématique de l'image du faisceau lumineux produit par le module de la figure 1 dans la première configuration ;
- La figure 3 est une représentation schématique de côté du module de la figure 1, dans une deuxième configuration ;
- La figure 4 est une représentation schématique de l'image du faisceau lumineux produit par le module de la figure 2 dans la deuxième configuration.

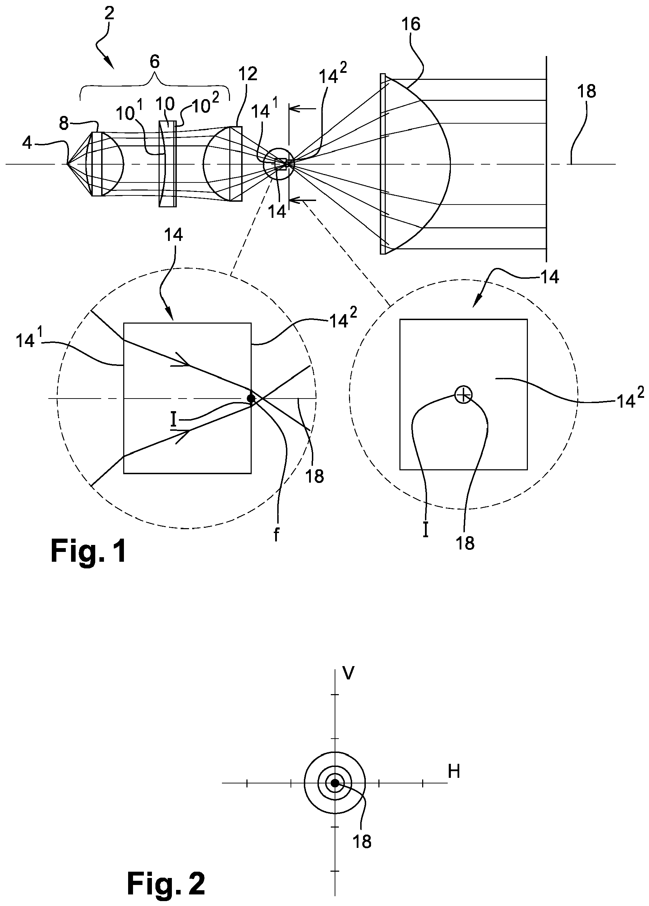

La figure 1 illustre un module optique lumineux conforme à l'invention. Le module optique 2 comprend une source lumineuse, préférentiellement du type diode à électroluminescence ou encore du type laser, un premier système optique 6, un élément de mise en forme 14 et un deuxième système optique 16.

L'élément de mise en forme 14 est avantageusement un bloc en matériau transparent ou translucide avec une face d'entrée 14¹ apte à recevoir les rayons lumineux provenant du premier système optique 6, et une face de sortie 14² apte à faire sortir les rayons provenant de la face d'entrée 14¹.

Le deuxième système optique 16 est un système optique de projection avec un foyer situé au niveau de la face de sortie 14² de l'élément de mise en forme 14. En l'occurrence le deuxième système optique 16 est constitué d'une lentille plan-convexe.

Le premier système optique 6 est configuré pour focaliser les rayons lumineux émis par la source lumineuse 4 vers un foyer f situé dans l'élément de mise en forme 14 ou à proximité dudit élément. Plus précisément, le premier système optique 6 présente une puissance optique variable, c'est-à-dire que la distance focale du point de convergence des rayons vers l'élément de mise en forme 14 est ajustable. Pour ce faire le premier système optique 6 comprend une lentille 10 à distance focale variable. Une telle lentille est notamment disponible commercialement auprès de la société Optoptune® ou encore auprès de la société varioptic®.

Les lentilles Optotune® sont des lentilles de forme changeante et réglables électriquement. Le noyau de la lentille est constitué d'un récipient rempli avec un fluide optique et rendu étanche avec une membrane de polymère élastique. Un actionneur électromagnétique intégré dans la lentille commande un anneau qui exerce une pression sur le récipient. La déformation de la lentille dépend de la pression dans le fluide. Par conséquent, la longueur focale de la lentille peut être contrôlée par le courant circulant à travers la bobine de l'actionneur. A titre d'exemple, l'ouverture de la lentille Optotune® EL-10-30 est de 10 mm et la longueur focale peut varier entre 20 à 120 mm. Les tensions électriques nécessaires pour couvrir la plage de réglage complète sont faibles (inférieures 5 V).

Les lentilles varioptic® sont basées sur le phénomène d'électro-mouillage. Une goutte d'eau est déposée sur un substrat en métal et recouverte par une couche isolante mince. La tension appliquée au substrat modifie l'angle de contact de la goutte de liquide. La lentille liquide utilise deux liquides de même densité, l'un est un isolant électrique tandis que l'autre est un conducteur électrique. La variation de tension entraîne une variation de la courbure de l'interface liquide-liquide, qui conduit à une modification de la distance focale de la lentille.

Le premier système optique 6 peut comprendre une première lentille plan-convexe 8 disposée entre la source lumineuse 4 et la lentille à distance focale variable 10, avec un foyer correspondant à la source lumineuse, de manière à projeter les rayons lumineux de la source lumineuse vers la lentille à distance focale variable 10. Cette dernière est dans une configuration divergente à la figure 1, en l'occurrence avec une face d'entrée 10¹ concave et une face de sortie 10² généralement plane. Les rayons sont alors étalés et transmis vers une deuxième lentille plan-convexe 12, en l'occurrence vers la face d'entrée convexe de la lentille 12 en question. Cette dernière a son foyer situé sur, ou au moins à proximité de, l'élément de mise en forme 14.

La source lumineuse 4, le premier système optique 6 et le deuxième système optique sont avantageusement alignés sur l'axe 18 correspondant à l'axe optique 18 du faisceau lumineux produit par le module 2. L'axe optique 18 passe également par l'élément de mise en forme 14. Ce dernier n'est cependant pas nécessairement centré sur ledit axe.

Dans la configuration de la figure 1, le premier système optique 6 est configuré pour former au foyer *f* une image *l* de la source lumineuse 4 sur la face de sortie 14² de l'élément de mise en forme. La face de sortie 14² en question est de taille supérieure à l'image de la source lumineuse de sorte que l'image *l* de ladite source sur ladite face n'occupe qu'une portion centrale de la face en question. L'image *l* est ensuite projetée par le deuxième système optique 16 de manière à former un faisceau lumineux concentré et sans coupure.

La figure 2 illustre de manière schématique l'image du faisceau lumineux, sur un diagramme reprenant les directions horizontale H et verticale V du faisceau, ces axes étant concourants avec l'axe optique 18 du module. Des courbes iso-lux, c'est-à-dire des courbes de flux lumineux par unité de surface (exprimé en lux) constant y sont représentées. On peut observer que l'image du faisceau est généralement circulaire et concentrée, correspondant à l'image de la source lumineuse. Dans cette configuration, la portion de la face de sortie 14² avec un niveau d'éclairement supérieur ou égal à 1/10 de l'éclairement maximal Emax correspond à moins de 50%, préférentiellement moins de 30%, plus préférentiellement moins de 15%, de ladite face éclairée, sans que les bords de ladite face soient inclus dans la portion avec un niveau d'éclairement supérieur ou égal à Emax/10 .

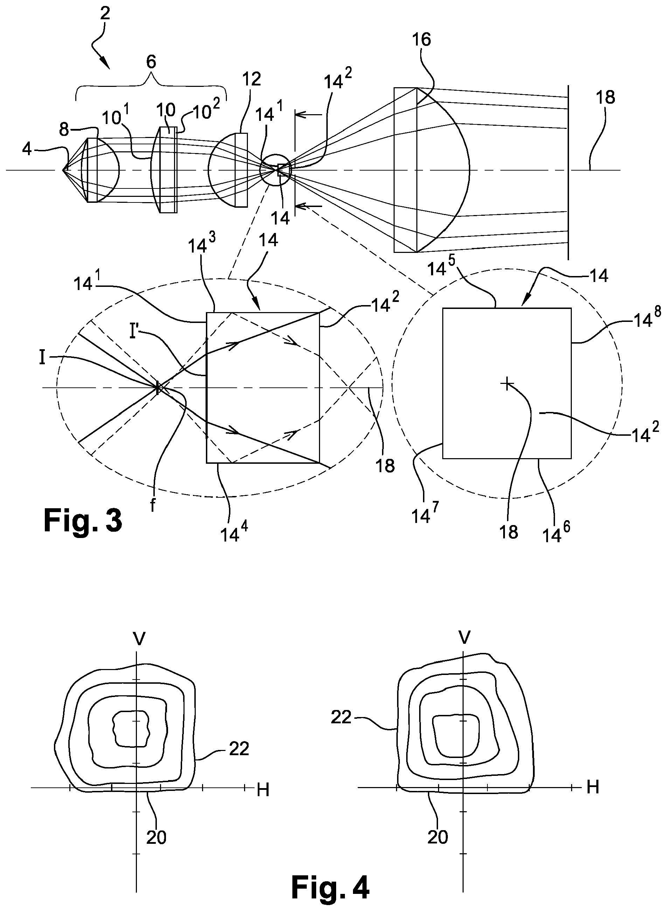

La figure 3 est une représentation schématique de côté du module de la figure 1 dans une deuxième configuration. Le premier système optique est configuré pour faire converger les rayons à l'arrière de la face de sortie 14² de l'élément de mise en forme 14, en l'occurrence à l'arrière de la face d'entrée 14¹ dudit élément, selon le sens de parcours des rayons. Les rayons provenant du premier système optique 6 convergent vers le foyer *f* avant de rencontrer la face d'entrée 14¹. Les rayons lumineux éclairent alors la face d'entrée 14¹ suivant une image *l*' potentiellement agrandie de l'image *l* de la source lumineuse. Une partie des rayons se propageant dans la matière transparente ou translucide de l'élément 14, depuis la face d'entrée 14¹, de manière à rencontrer une des faces latérales 14³ et 14⁴ dudit élément. Compte tenu de l'angle d'incidence qui est potentiellement supérieur à l'angle de réfraction limite (de l'ordre de 40° pour du polycarbonate d'un indice de réfraction de l'ordre de 1.54 suivant la loi de Snell-Descartes), ces rayons vont subir une réflexion suivant le principe de réflexion totale et continuer à se propager le long de l'élément vers la face de sortie 14². Ces rayons sont représentés par les deux rayons en trait interrompu à la vue de détail de la figure 3. D'autres rayons provenant de la face d'entrée 14¹ se propagent directement jusqu'à la face de sortie 14² sans subir de réflexion. Ces rayons sont représentés par les deux rayons en trait continu à la vue de détail de la figure 3.

L'image de la source lumineuse n'est ainsi plus présente sur la face de sortie 14², contrairement à la première configuration de la figure 1, car une partie des rayons provenant de la source lumineuse subissent des réflexions au sein de l'élément de mise en forme 14. La totalité ou du moins la quasi-totalité de la face de sortie 14² est éclairée si bien que c'est une image de la face de sortie en question qui va alors être projetée par le deuxième système optique 16.

La vue de détail de face de l'élément de mise en forme 14 montre que la totalité de la face de sortie 14² est éclairée et que la surface éclairée est limitée ou coupée par les bords 14⁵, 14⁶, 14⁷ et 14⁸ de la face de sortie 14². Dans cette configuration, les bords de ladite face de sortie (14²) sont éclairés à au moins 1/10 de l'éclairement maximal Emax de la face de sortie.

La figure 4 illustre, similairement à la figure 2, l'image du faisceau lumineux produit par le module selon la configuration de la figure 3. Des courbes iso-lux, c'est-à-dire des courbes de flux lumineux par unité de surface (exprimé en lux) constant y sont représentées. Plus précisément, la figure 4 illustre deux exemples de faisceau que le module peut produire, ces deux faisceaux présentant des images essentiellement symétriques par rapport à un plan vertical médian entre les deux diagrammes. On peut, en effet, observer à la figure 4 que chacune des deux images comporte deux bords de coupure 20 et 22 adjacents qui sont formés par deux faces latérales de l'élément de mise en forme 14 qui leur correspondent optiquement et qui sont également adjacents. En l'occurrence le bord de coupure inférieur 20 est formé par la face latérale supérieure 14³ et le bord correspondant 14⁵ au niveau de la face de sortie 14². Similairement, le bord de coupure latéral 22 est formé par une des faces latérales de côté s'étendant entre les faces latérales supérieure 14³ et inférieure 14⁴ et par le bord 14⁷ ou 14⁸ correspondant.

Les deux images représentées à la figure 4 illustrent une application de la mise en forme du faisceau selon l'invention dans le cadre d'un dispositif d'éclairage du type route évolutif en encore ADB, acronyme pour l'expression anglaise « adaptative driving beam ». Le véhicule peut ainsi être équipé de deux modules selon l'invention, chacun étant logé dans un dispositif d'éclairage disposé à l'avant du véhicule, ces dispositifs étant disposés latéralement de part et d'autre de l'axe longitudinal du véhicule. Chacun des modules est configuré pour produire un faisceau selon l'une des représentations de la figure 4, respectivement, de sorte à ce que les bords de coupure verticaux 22 de chacun des deux faisceaux soit en vis-à-vis, formant ainsi une zone plus sombre entre les deux bords faisceaux. Cette zone peut alors être déplacée et ajustée en largeur par pivotement contrôlé des modules suivant des axes généralement verticaux.

Un tel dispositif d'éclairage peut ainsi compléter une fonction d'éclairage du type croisement avec une coupure horizontale. Les coupures horizontales 20 illustrées à la figure 4 viennent alors compléter la coupure horizontale du faisceau de croisement.

A la figure 4, les deux autres bords de chacune des images ne présentent pas de coupure. La ou les faces latérales de l'élément de mise en forme 14 correspondant à ces bords peuvent ainsi avantageusement être libres de face de réflexion et de bord de coupure et, partant, servir de zone de fixation de l'élément en vue de son maintien en position par rapport aux autres éléments du module.

La mise en forme illustrée à la figure 4 est cependant purement exemplative, étant entendu que d'autres formes sont possibles, comme notamment une mise en forme avec un seul bord de coupure ou encore plus de deux bords de coupure, comme par exemple quatre bords de coupure.

La fonction d'éclairage qui vient d'être décrite en relation avec les figures 3 et 4 et la deuxième configuration peut être désactivée pour revenir à la première configuration selon les figures 1 et 2, auquel cas le module optique produit un faisceau d'éclairage plus concentré et sans coupure. Il peut notamment être utilisé comme fonction d'éclairage du type longue portée, utilisable notamment à plus haute vitesse et en l'absence de véhicules à contresens.

La source lumineuse est avantageusement du type laser car elle présente une luminance élevée et permet ainsi de réaliser un faisceau concentré représentant l'image de la source en question. L'utilisation d'une telle source lumineuse pour une autre fonction telle qu'une fonction d'éclairage route évolutif en complément d'une fonction d'éclairage du type croisement est intéressante car la puissance de cette source lumineuse peut s'avérer insuffisante pour assurer une fonction d'éclairage route globale mais bien pour un complément à la fonction d'éclairage du type croisement.

## Revendications

1. Module optique (2) apte à former un faisceau lumineux, comprenant :
- au moins une source lumineuse (4) apte à émettre de la lumière ;
- un premier système optique (6) à puissance optique variable, apte à recevoir la lumière de la ou des sources lumineuses (4) et à la faire converger vers un foyer (f) à une distance focale variable ;
**caractérisé en ce qu'**il comprend, en outre :
- un élément (14) de mise en forme du faisceau lumineux, en matériau transparent ou translucide avec une face d'entrée (14¹) apte à recevoir la lumière du premier système optique (6), et une face de sortie (14²) apte à être éclairée par ladite lumière, le foyer (f) du premier système optique (6) pouvant être déplacé de l'avant à l'arrière de la face d'entrée (14¹), et vice versa, de manière à faire varier l'étendue de la face de sortie (14²) qui est éclairée ; et
- un deuxième système optique (16) apte à projeter la lumière sortant de la face de sortie (14²) en vue former le faisceau lumineux suivant un axe optique du module (18).

2. Module optique (2) selon la revendication 1, **caractérisé en ce que** l'élément de mise en forme (14) comprend au moins une face latérale (14³, 14⁴) apte à réfléchir une partie de la lumière lorsque le foyer (f) du premier système optique (6) est situé à l'arrière, suivant le sens de parcours de la lumière, de la face de sortie (14²), préférentiellement de la face d'entrée (14¹), dudit élément (14).

3. Module optique (2) selon l'une des revendications 1 à 2, **caractérisé en ce que** le deuxième système optique (16) comprend un foyer situé sur la face de sortie (14²) de l'élément de mise en forme (14).

4. Module optique (2) selon l'une des revendications 1 à 3, **caractérisé en ce que** la face de sortie (14²) de l'élément de mise en forme (14) comprend au moins un, préférentiellement deux bords (14⁵, 14⁶, 14⁷, 14⁸) généralement droits et **en ce que** ledit module optique (2) est configuré pour que, lorsque le foyer (f) du premier système optique (6) est situé à l'arrière, suivant le sens de parcours de la lumière, de la face d'entrée (14¹) de l'élément de mise en forme (14), l'éclairement au niveau d'au moins un desdits bords, préférentiellement des deux bords, est supérieur ou égal à 1/10 de l'éclairement maximum Emax de la face de sortie (14²) dudit élément, ledit au moins un bord servant de bord(s) de coupure (20, 22) du faisceau lumineux, de manière à ce que le faisceau lumineux forme une image dont une partie du contour correspond à un contour de ladite face de sortie.

5. Module optique (2) selon la revendication 4, **caractérisé en ce que** le faisceau lumineux, lorsque les bords de la face de sortie (14²) de l'élément de mise en forme (14) sont éclairés à Emax/10 ou plus, forme une image avec une coupure généralement verticale (22) et une coupure horizontale (20), lesdites coupures (20, 22) correspondant aux deux bords (14⁶, 14⁷; 14⁶, 14⁸).

6. Module optique (2) selon l'une des revendications 1 à 5, **caractérisé en ce qu'**il est configuré pour que, lorsque le foyer (*f*) du premier système optique (6) est situé à l'avant, suivant le sens de parcours de la lumière, de la face d'entrée (14¹) et sur, ou à l'arrière de, la face de sortie (14²) de l'élément de mise en forme (14), une portion de la face de sortie (14²) avec un niveau d'éclairement supérieur ou égal à Emax/10 correspondant à moins de 50%, préférentiellement moins de 30%, plus préférentiellement moins de 15%, de ladite face soit éclairée, sans que les bords de ladite face soient inclus dans la portion avec un niveau d'éclairement supérieur ou égal à Emax/10 .

7. Module optique (2) selon la revendication 6, **caractérisé en ce qu'**il est configuré pour que le foyer (*f*) du premier système optique (6) puisse être situé suffisamment proche de la face de sortie (14²) de l'élément de mise en forme (14) de sorte à ce que la portion éclairée de la face de sortie (14²) forme une image de la ou des sources lumineuses (4).

8. Module optique (2) selon l'une des revendications 6 et 7, **caractérisé en ce que** le faisceau lumineux, lorsqu'une portion seulement de la face de sortie (14²) de l'élément de mise en forme (14) est éclairée, forme une image dont le contour correspond au contour de ladite portion.

9. Module optique (2) selon l'une des revendications 1 à 8, **caractérisé en ce que** le premier système optique (6) comprend une lentille (10) à distance focale variable.

10. Module optique (2) selon la revendication 9, **caractérisé en ce que** la lentille à distance focale variable (10) forme un dioptre (10¹) dont la forme est modulable par l'action d'un liquide contenu dans la lentille, le liquide pouvant être mis sous pression ou déformé par application d'un champ électrique.

11. Module optique (2) selon la revendication 10, **caractérisé en ce que** le dioptre (10¹) peut changer de concavité.

12. Module optique (2) selon l'une des revendications 9 à 11, **caractérisé en ce que** le premier dispositif optique (6) comprend, en outre, une première lentille (8) plan-convexe située entre la ou les sources lumineuses (4) et la lentille à distance focale variable (10), et une deuxième lentille (12) plan-convexe située entre la lentille à distance focale variable (10) et l'élément de mise en forme (14).

13. Dispositif d'éclairage pour véhicule automobile, comprenant un module optique, **caractérisé en ce que** le module optique (2) est selon l'une des revendications 1 à 12, ledit module (2) étant configuré pour assurer, alternativement, une première fonction d'éclairage sans coupure lorsque le foyer (*f*) du premier système optique (6) est positionné de manière à ce que moins de 50% de la face de sortie (14²) de l'élément de mise en forme soit éclairée avec un niveau d'éclairement supérieur ou égal à Emax/10, sans que les bords de ladite face soient inclus dans la portion avec un niveau d'éclairement supérieur ou égal à Emax/10, et une deuxième fonction d'éclairage avec coupure, notamment verticale (22), lorsque ledit foyer (f) est positionné de manière à ce que les bords de ladite face de sortie (14²) soit éclairés à au moins 1/10 de l'éclairement maximal Emax de la face de sortie.

14. Dispositif d'éclairage selon la revendication 13, **caractérisé en ce que** la deuxième fonction d'éclairage comprend une coupure horizontale (20) et est configurée pour compléter vers le haut une fonction d'éclairage à coupure horizontale du type croisement.

15. Dispositif d'éclairage selon l'une des revendications 13 et 14, **caractérisé en ce que** le module (2) est monté pivotant suivant un axe essentiellement vertical, la deuxième fonction d'éclairage étant configurée pour coopérer avec un autre dispositif d'éclairage symétrique par rapport à un plan vertical longitudinal du véhicule, en vue former un faisceau d'éclairage avec une zone intermédiaire plus sombre et mobile horizontalement par pivotement contrôlé desdits modules.
